# DEMANDE DE BREVET EUROPEEN

(11) **EP 3 579 070 A1**
(43) Date de publication de la demande: **11.12.2019**
(21) Numéro de dépôt: 19176036.2
(22) Date de dépôt: 22.05.2019
(51) Int. Cl.: G05B 19/418

(54) **PROCÉDÉ D'ASSEMBLAGE DE PIÈCES SUR UNE LIGNE D'ASSEMBLAGE**

(30) Priorité: 05.06.2018 FR 1854847
(71) Demandeur: PSA Automobiles SA, 78300 Poissy (FR)
(72) Inventeur: ROUSSIER, Cédric, 62660 BEUVRY (FR); DARCQUE, Michel, 62580 VIMY (FR); DARRAS, Patrick, 59148 FLINES LEZ RACHES (FR)

(57) **Abrégé**

L'invention a trait à un procédé d'assemblage de pièces (4) sur une ligne d'assemblage (2) avec plusieurs postes d'assemblage successifs (10), le procédé comprenant un mode d'assemblage en série où les pièces (4) introduites en début de ligne passent successivement par tous les postes d'assemblage (10). Le procédé comprend, en outre un mode d'assemblage capacitaire où les pièces (4) chargées en début de ligne (2) passent successivement par un sous-ensemble (26) des postes (10) d'assemblage et quittent la ligne d'assemblage, à un état partiellement assemblé (4'), avant la sortie de ladite ligne, sont stockées de manière provisoire et ensuite réintroduites dans ladite ligne en mode d'assemblage en série. L'invention a également trait à une ligne d'assemblage.

## Description

L'invention a trait au domaine de l'assemblage de pièces sur une ligne d'assemblage.

Une ligne d'assemblage de pièces comprend généralement un ensemble de postes d'assemblage sur lesquels sont réalisés des opérations aboutissant à la formation des pièces. Lorsqu'un problème survient sur un des postes de la ligne d'assemblage, les postes situés en amont du poste déficient doivent être mis à l'arrêt, ce qui est pénalisant d'un point de vue productivité.

Le document de brevet publié FR 2 878 353 A1 divulgue une méthode de détection de la position de goulets d'étranglement sur une ligne d'assemblage de pièces complexes telles que des véhicules automobiles impliquant des opérations manuelles susceptibles de varier dans le temps. La méthode comprend la division d'une portion de la ligne d'assemblage entre des zones transitoires et des zones stationnaires, lesdites zones étant alternées. La méthode comprend la comparaison d'un temps de transfert de deux pièces consécutives entre les zones stationnaires et transitoires avec un temps de transfert maximum déterminé. Des temps de transfert normal et maximum sensiblement égaux sont représentatifs d'un gouffre d'étranglement au sein de la zone concernée.

Le document de brevet publié DE 10 2009 056 477 A1 divulgue un procédé de fabrication de véhicules. Les véhicules passent successivement à travers un ensemble de postes de traitement dans un temps de cycle. Un ensemble de dispositifs spéciaux est assigné à chaque véhicule. Les étapes de traitement pour deux dispositifs différents et associés au véhicule sont distribuées à deux postes de traitement différents, si le temps requis pour les deux étapes de traitement dépasse ensemble ce temps de cycle de plus d'une valeur prédéterminée qui est affectée au poste de traitement respectif.

Le document de brevet publié FR 2 787 411 A1 divulgue un procédé de fabrication d'unités diversement équipées sur une ligne d'assemblage telles que des véhicules automobiles, cette ligne comportant une pluralité de postes dans lesquels lesdites unités arrivent séparées les unes des autres par un temps de cycle prédéterminé pour y subir des séquences d'opérations d'assemblage pouvant varier d'une unité à une autre. Le procédé comprend une étape d'identification des postes présentant une surcharge moyenne de travail et une étape de transfert de certaines opérations d'assemblage initialement prévus dans ces postes vers d'autres postes moins chargés.

Les procédés d'assemblage de pièces décrits dans l'état de l'art ci-dessus présentent des solutions visant essentiellement à identifier les goulets d'étranglement sur une ligne d'assemblage de produits complexes tels que des véhicules automobiles. Certains prévoient aussi des mesures pour tenter de réduire le temps de cycle sur le ou les postes d'assemblage formant les goulets d'étranglement. Ces mesures sont cependant d'une portée limitée, en particulier lorsque les opérations sur le ou les postes d'assemblage requièrent intrinsèquement un temps de cycle important.

L'invention a pour objectif de pallier au moins un des inconvénients de l'état de la technique susmentionné. Plus particulièrement, l'invention a pour objectif de fournir un procédé d'assemblage de pièces sur une ligne d'assemblage permettant d'optimiser la productivité sur une ligne d'assemblage, notamment lorsqu'un certain nombre de postes d'assemblage sont sous-exploités par rapport à d'autres sur une même ligne d'assemblage.

L'invention a pour objet un procédé d'assemblage de pièces sur une ligne d'assemblage avec plusieurs postes d'assemblage successifs, le procédé comprenant un mode d'assemblage en série où les pièces introduites en début de ligne passent successivement par tous les postes d'assemblage ; remarquable en ce que le procédé comprend, en outre un mode d'assemblage capacitaire où les pièces chargées en début de ligne passent successivement par un sous-ensemble des postes d'assemblage et quittent la ligne d'assemblage, à un état partiellement assemblé, avant la sortie de ladite ligne, sont stockées de manière provisoire et ensuite réintroduites dans ladite ligne en mode d'assemblage en série.

Selon un mode avantageux de l'invention, ledit procédé prévoit de passer du mode d'assemblage en série vers le mode d'assemblage capacitaire en cas de blocage sur la ligne d'assemblage en aval du sous-ensemble des postes d'assemblage et pour passer du mode d'assemblage capacitaire vers le mode d'assemblage en série lorsque le blocage est levé.

Selon un mode avantageux de l'invention, dans le mode d'assemblage en série après levée du blocage, les pièces partiellement assemblées sont réintroduites sur la ligne d'assemblage pour y terminer leur assemblage.

Selon un mode avantageux de l'invention, la réintroduction des pièces partiellement assemblées sur la ligne d'assemblage se fait en amont de là où elles sont préalablement sorties de la ligne d'assemblage, lesdites pièces ne subissant pas d'opération d'assemblage au travers des postes du sous-ensemble de postes d'assemblage.

Selon un mode avantageux de l'invention, au moins un des postes d'assemblage du sous-ensemble de postes d'assemblage présente un temps de cycle supérieur à un temps de cycle moyen de tous les postes d'assemblage de la ligne d'assemblage ou en ce que les postes d'assemblage du sous-ensemble de postes d'assemblage présentent un temps de cycle moyen supérieur à un temps de cycle moyen de tous les postes d'assemblage de la ligne d'assemblage.

Selon un mode avantageux de l'invention, dans le mode d'assemblage en série, les pièces partiellement assemblées et stockées lors d'un ou plusieurs modes d'assemblage capacitaire sont réintroduites de manière périodique.

Selon un mode avantageux de l'invention, dans le mode d'assemblage en série, un premier type et un deuxième type de pièces sont assemblés par paire, les pièces partiellement assemblées dans le mode d'assemblage capacitaire étant du premier type et réintroduites entre deux pièces du deuxième type de manière à former lesdites paires.

Selon un mode avantageux de l'invention, la ligne d'assemblage comprend une première portion commune aux premier et deuxième types de pièces et une deuxième et troisième portions formant une ramification en aval de la première portion, la deuxième portion étant pour les pièces du premier type et la troisième portion pour les pièces du deuxième type, le mode d'assemblage capacitaire étant précédé d'un vidage de la première portion des paires de pièces du premier et deuxième type vers les deuxième et troisième portions, respectivement.

Selon un mode avantageux de l'invention, les pièces partiellement assemblées et réintroduites dans le mode d'assemblage en série sont transportées sur des supports présentant un moyen d'identification permettant le passage desdites pièces partiellement assemblées au travers des postes du sous-ensemble de postes d'assemblage.

L'invention a également pour objet une ligne d'assemblage de pièces, comprenant une ligne de convoyage des pièces ; des postes d'assemblage des pièces, répartis le long de la ligne de convoyage ; un système de contrôle de la ligne de convoyage ; remarquable en ce que le système de contrôle est configuré pour mettre en oeuvre le procédé selon l'invention.

Les mesures de l'invention sont intéressantes en ce que le procédé d'assemblage de l'invention permet d'éviter ou de pallier aux problèmes ou perturbations qui peuvent intervenir sur la ligne d'assemblage dans un mode d'assemblage en série et empêchent de respecter les volumes de production. Le mode d'assemblage capacitaire est réalisé dans un temps de non production c'est-à-dire un temps pendant lequel l'assemblage en série est à l'arrêt. Le mode capacitaire du procédé de l'invention peut être utilisé de façon provisoire ou pérenne sur une ligne d'assemblage de pièces. L'invention permet ainsi de réadapter le flux de production ou d'anticiper un éventuel retard sur la ligne d'assemblage. En effet, le mode d'assemblage capacitaire peut être utilisé pour des pièces dont l'assemblage aurait pris trop de temps dans un mode d'assemblage en série Le mode d'assemblage capacitaire est effectué sur la même ligne d'assemblage que le mode en série et ne nécessite pas de modification substantielle de la ligne d'assemblage. L'invention est également avantageuse en ce qu'elle est simple à mettre en oeuvre et peu coûteuse.

D'autres caractéristiques et avantages de la présente invention seront mieux compris à l'aide de la description et des dessins parmi lesquels :
- La figure 1 représente une ligne d'assemblage sur laquelle est mis en place un procédé d'assemblage de pièces, conformément à l'invention ;
- Les figures 2 à 4 représentent différentes étapes du procédé d'assemblage de l'invention sur la ligne d'assemblage de la figure 1.

Dans ce qui suit, l'invention aura comme exemple d'application une ligne d'assemblage de composants d'un moteur thermique. Cependant, il est entendu que l'invention n'est pas limitée à cette application et peut être utilisée pour toute ligne d'assemblage de tout type de pièces ou produits.

Selon l'exemple d'application et de façon connue en soi, les culasses et les porte-arbres à came, qui composent un moteur thermique de véhicule automobile sont assemblés sur une même ligne d'assemblage, pour y être ensuite assemblés les uns aux autres. Pour des questions de contrôle qualité notamment, il est important que les porte-arbres à came et culasses soient sur la même ligne d'assemblage.

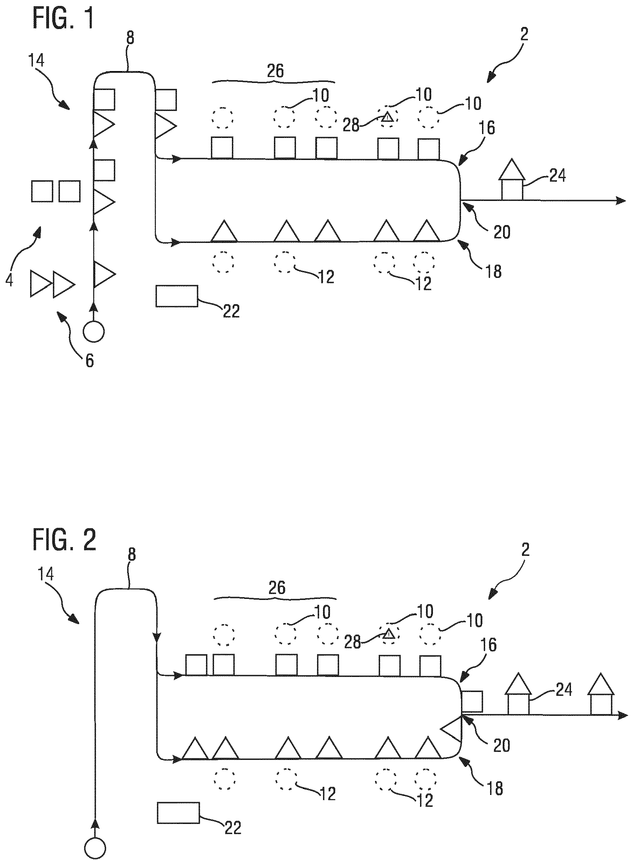

La figure 1 représente une ligne d'assemblage 2 de pièces 4 et 6. La ligne d'assemblage 2 comprend une ligne de convoyage 8 et des postes d'assemblage 10 et 12 respectivement des pièces 4 et 6. Les postes d'assemblage 10 et 12 sont répartis sur la ligne d'assemblage 2.

Le procédé d'assemblage de l'invention comprend un mode d'assemblage en série dans lequel des pièces 4, 6 chargées en début de la ligne d'assemblage 2 passent successivement par tous les postes d'assemblage 10, 12 respectivement. Chaque poste d'assemblage 10, 12 a un temps de cycle qui est lui propre.

Selon le mode de réalisation tel que représenté à la figure 1, dans le mode d'assemblage en série, les pièces 4 sont un premier type de pièces et les pièces 6 sont un deuxième type de pièces. Les premier et deuxième types de pièces 4 et 6 sont assemblés par paire. La ligne d'assemblage 2 comprend une première portion 14 commune aux premier et deuxième types de pièces 4 et 6. La ligne d'assemblage 2 comprend également une deuxième portion 16 pour les pièces 4 du premier type et une troisième portion 18 pour les pièces 6 du deuxième type. Les deuxième et troisième portions 16 et 18 forment une ramification 20 en aval de la première portion 14. La ligne d'assemblage 2 comprend également un système de contrôle 22 de la ligne de convoyage 8. Les pièces 4 et 6 sont transportées sur des supports sur la ligne d'assemblage. Les supports ne sont pas représentés. Les supports peuvent par exemple être des luges.

Selon l'exemple d'application de l'invention, les pièces 4 du premier type peuvent par exemple être des culasses de moteur thermique de véhicule automobile et les pièces 6 du deuxième type peuvent être des porte-arbres à came destinés à être assemblés avec la culasse. L'assemblage d'une culasse 4 et d'un arbre à came 6 est identifié par la référence 24.

Au moins un des postes d'assemblage 10 d'un sous-ensemble 26 de postes d'assemblage 10 présente un temps de cycle supérieur à un temps de cycle moyen de tous les postes d'assemblage 10 de la ligne d'assemblage 2. Alternativement, les postes d'assemblage 10 du sous-ensemble 26 de postes d'assemblage présentent un temps de cycle moyen supérieur à un temps de cycle moyen de tous les postes d'assemblage 10 de la ligne d'assemblage 2.

Toujours selon l'exemple d'application de l'invention, le sous-ensemble 26 des postes d'assemblage 10 de ligne d'assemblage 2 peut comprendre plusieurs opérations d'assemblage d'éléments spécifiques d'une culasse tel que l'assemblage de ressorts, de soupapes, de coupelles etc. sur la culasse.

Afin de pallier ou d'éviter un retard sur la ligne d'assemblage, le procédé de l'invention comprend, en outre, un mode d'assemblage capacitaire dans lequel les pièces 4 chargées en début de ligne d'assemblage 2 passent successivement par le sous-ensemble 26 de postes 10 et quittent la ligne d'assemblage à un état partiellement assemblé pour être réintroduites dans le mode d'assemblage en série.

Le procédé peut prévoir de passer du mode d'assemblage en série vers le mode d'assemblage capacitaire en cas de blocage sur la ligne d'assemblage 2 en aval du sous-ensemble 26 de postes d'assemblage. Le blocage est identifié à la figure 1 par la référence 28. Après, détection du blocage 28, le mode d'assemblage capacitaire est engagé via le système de contrôle 22 de la ligne d'assemblage 2.

Le mode d'assemblage capacitaire est précédé d'un vidage de la première portion 14 des paires de pièces 4, 6 du premier et deuxième type, vers les deuxième et troisième portions 16 et 18, respectivement, tel que représenté à la figure 2.

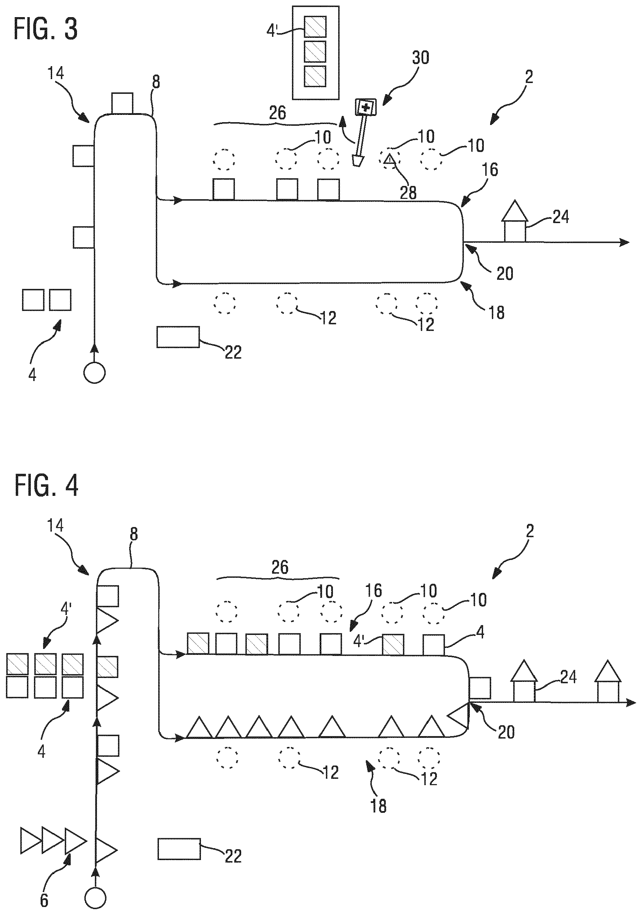

La figure 3 représente le passage en mode capacitaire après vidage de la première portion 14. Dans le mode d'assemblage capacitaire, les pièces 4 introduites en début de ligne, en l'occurrence les culasses, passent successivement par le sous-ensemble 26 de postes d'assemblage 10.

Toujours sur la figure 3, l'assemblage du premier type de pièces 4, ici la culasse, est arrêté à un des postes du sous-ensemble 26 de postes d'assemblage 10. Les pièces partiellement assemblées 4' quittent la ligne d'assemblage 2, avant la sortie de la ligne d'assemblage 2. Les pièces partiellement assemblées 4' quittent la ligne d'assemblage 2 au moyen d'un préhenseur 30 par exemple, et sont stockées de manière provisoire.

Le procédé peut prévoir de repasser du mode d'assemblage capacitaire vers le mode d'assemblage en série lorsque que le blocage 28 est levé. Le passage du mode d'assemblage capacitaire vers le mode d'assemblage en série est également précédé du vidage de la première portion 14 de la ligne d'assemblage 2.

La figure 4 représente la ligne d'assemblage 2 dans le mode d'assemblage en série après le mode d'assemblage capacitaire. Les pièces partiellement assemblées 4', lors d'un ou plusieurs modes d'assemblage capacitaire et stockées sont réintroduites sur la ligne d'assemblage 2 dans le mode en série pour y terminer leur assemblage. Les pièces partiellement assemblées 4' sont réintroduites sur la ligne d'assemblage 2 de manière périodique.

Les pièces partiellement assemblées 4' peuvent être réintroduites entre deux pièces 6 du deuxième type, de manière à former les paires. Les pièces partiellement assemblées 4' sur la ligne d'assemblage 2 peuvent être réintroduites en amont de la où elles sont préalablement sorties de la ligne d'assemblage, tel que représenté à la figure 4. Les pièces partiellement assemblées 4' ne subissent pas d'opération d'assemblage au travers des postes 10 du sous-ensemble 26 de postes d'assemblage. Les postes 10 du sous-ensemble 26 peuvent ainsi tenir la cadence dans le mode d'assemblage en série. Les pièces partiellement assemblées 4' réintroduites dans le mode d'assemblage en série sont transportées sur des supports présentant un moyen d'identification permettant le passage desdites pièces partiellement assemblées 4' au travers des postes 10 du sous-ensemble 26 de postes d'assemblage. Le moyen d'identification renseigne l'opérateur de chacun des postes d'assemblage 10 de l'état d'assemblage de la pièce. Les moyens d'identification peuvent par exemple être une étiquette RFID (« Radio Frequency Identification » ou radio-identification) lue à chacun des postes d'assemblage.

Le mode d'assemblage capacitaire permet de réadapter le flux de la ligne d'assemblage ou de préparer à l'avance des pièces partiellement assemblées dont l'assemblage en série aurait ralenti la ligne d'assemblage. L'assemblage des pièces partiellement équipées dans le mode d'assemblage capacitaire peut par exemple être réalisé la nuit pendant des temps de non-production.

## Revendications

1. Procédé d'assemblage de pièces (4, 6) sur une ligne d'assemblage (2) avec plusieurs postes d'assemblage successifs (10, 12), le procédé comprenant :
- un mode d'assemblage en série où les pièces (4, 6) introduites en début de ligne passent successivement par tous les postes d'assemblage (10, 12) ;
**caractérisé en ce que** le procédé comprend, en outre :
- un mode d'assemblage capacitaire où les pièces (4) chargées en début de ligne passent successivement par un sous-ensemble (26) des postes d'assemblage (10) et quittent la ligne d'assemblage (2), à un état partiellement assemblé (4'), avant la sortie de ladite ligne, sont stockées de manière provisoire et ensuite réintroduites dans ladite ligne (2) en mode d'assemblage en série.

2. Procédé selon la revendication 1, **caractérisé en ce que** ledit procédé prévoit de passer du mode d'assemblage en série vers le mode d'assemblage capacitaire en cas de blocage (28) sur la ligne d'assemblage (2) en aval du sous-ensemble (26) des postes d'assemblage (10) et pour passer du mode d'assemblage capacitaire vers le mode d'assemblage en série lorsque le blocage est levé.

3. Procédé selon la revendication 2, **caractérisé en ce que**, dans le mode d'assemblage en série après levée du blocage (28), les pièces partiellement assemblées (4') sont réintroduites sur la ligne d'assemblage (2) pour y terminer leur assemblage.

4. Procédé selon la revendication 3, **caractérisé en ce que** la réintroduction des pièces partiellement assemblées (4') sur la ligne d'assemblage (2) se fait en amont de là où elles sont préalablement sorties de la ligne d'assemblage (2), lesdites pièces (4') ne subissant pas d'opération d'assemblage au travers des postes (10) du sous-ensemble (26) de postes d'assemblage.

5. Procédé selon l'une des revendications 1 à 4, **caractérisé en ce qu'**au moins un des postes d'assemblage (10) du sous-ensemble (26) de postes d'assemblage présente un temps de cycle supérieur à un temps de cycle moyen de tous les postes d'assemblage de la ligne d'assemblage (2) ou **en ce que** les postes d'assemblage (10) du sous-ensemble (26) de postes d'assemblage présentent un temps de cycle moyen supérieur à un temps de cycle moyen de tous les postes d'assemblage (10) de la ligne d'assemblage (2).

6. Procédé selon l'une des revendications 1 à 5, **caractérisé en ce que** dans le mode d'assemblage en série, les pièces partiellement assemblées (4') et stockées lors d'un ou plusieurs modes d'assemblage capacitaire sont réintroduites de manière périodique.

7. Procédé selon l'une des revendications 1 à 6, **caractérisé en ce que**, dans le mode d'assemblage en série, un premier type (4) et un deuxième type (6) de pièces sont assemblés par paire, les pièces partiellement assemblées (4') dans le mode d'assemblage capacitaire étant du premier type et réintroduites entre deux pièces (6) du deuxième type de manière à former lesdites paires.

8. Procédé selon la revendication 7, **caractérisé en ce que** la ligne d'assemblage (2) comprend une première portion (14) commune aux premier et deuxième types de pièces (4, 6) et une deuxième et troisième portions (16, 18) formant une ramification (20) en aval de la première portion (14), la deuxième portion (16) étant pour les pièces (4) du premier type et la troisième portion (18) pour les pièces du deuxième type (6), le mode d'assemblage capacitaire étant précédé d'un vidage de la première portion (14) des paires de pièces du premier et deuxième type (4, 6) vers les deuxième et troisième portions (16, 18), respectivement.

9. Procédé selon l'une des revendications 4 à 8, **caractérisé en ce que** les pièces partiellement assemblées (4') et réintroduites dans le mode d'assemblage en série sont transportées sur des supports présentant un moyen d'identification permettant le passage desdites pièces partiellement assemblées (4') au travers des postes (10) du sous-ensemble (26) de postes d'assemblage.

10. Ligne d'assemblage (2) de pièces (4, 6), comprenant :
- une ligne de convoyage (8) des pièces (4, 6) ;
- des postes d'assemblage (10, 12) des pièces (4, 6), répartis le long de la ligne de convoyage ;
- un système de contrôle (22) de la ligne de convoyage (8) ;
**caractérisée en ce que** le système de contrôle (22) est configuré pour mettre en oeuvre le procédé selon l'une des revendications 1 à 9.
